# EUROPÄISCHE PATENTSCHRIFT

(11) **EP 2 842 766 B1**
(45) Veröffentlichungstag und Bekanntmachung des Hinweises auf die Patenterteilung: **20.03.2019**
(21) Anmeldenummer: 14170139.1
(22) Anmeldetag: 28.05.2014
(51) Int. Cl.: B60C 13/00

(54) **FAHRZEUGREIFEN**
VEHICLE TYRES
PNEU

(30) Priorität: 14.08.2013 DE 102013108786
(43) Veröffentlichungstag der Anmeldung: 04.03.2015
(73) Patentinhaber: Continental Reifen Deutschland GmbH, 30165 Hannover (DE)
(72) Erfinder: Rittweger, Stefan, 30163 Hannover (DE); Kuniak, Lubos, 018 63 Ladce (SK)
(74) Vertreter: Finger, Karsten

(56) Entgegenhaltungen:
- JP-A- H11 198 614
- US-A1- 2010 258 231
- US-A1- 2011 139 326

## Beschreibung

Die Erfindung betrifft einen Fahrzeugreifen mit einer dekorativen Seitenwandschraffur aus einer Vielzahl von nebeneinander verlaufenden Erhebungen, die eine Basisschraffur bilden, wobei von Erhebungen aus der Basisschraffur unter übereinstimmend großen Winkeln abgelenkte Abschnitte zumindest eine örtlich begrenzte Schraffurfläche bilden, wobei die abgelenkten Abschnitte durch nochmaliges, unter übereinstimmend großen Winkeln erfolgtes Ablenken in zumindest eine weitere Schraffurfläche übergehen, wobei die Erhebungen in sämtlichen Schraffurflächen Abschnitte im Verlauf von Erhebungen aus der Basisschraffur sind.

National oder EU-weit geltende Vorschriften erfordern es, an den Seitenwänden von Reifen bestimmte Zeichen bzw. Bezeichnungen anzubringen. Zu diesen Bezeichnungen gehören sowohl bei PKW- als auch bei LKW-Reifen Dimensionsbezeichnungen, Angaben über die Bauart des Reifens, gegebenenfalls Safety Warnings und dergleichen. Bei manchen dieser Angaben ist die Schriftgröße, zum Teil ist sogar die Position auf der Seitenwand vorgeschrieben. Trotzdem verbleiben auf den Seitenwänden eines Reifens freie Flächen, die für gestalterische Maßnahmen zur Verfügung stehen. Solche gestalterischen Maßnahmen waren immer wieder Gegenstand von Patentanmeldungen und Patenten. So ist beispielsweise aus der DE 4111345 A1 ein Fahrzeugreifen bekannt, bei dem die Erhebungen, welche Schraffurflächen bilden, in radialer Richtung fächerartig zusammenlaufend angeordnet sind
Aus der gattungsbildenden JP H11 198614 A ist ein Fahrzeugreifen der eingangs genannten Art bekannt, bei welchem die Erhebungen in den Schraffurflächen zueinander in Zick-Zackform und auf einfache Weise unter unterschiedlichen Winkeln zur radialen Richtung verlaufen, wobei die Schraffurflächen jeweils konzentrisch zur Reifenachse verlaufende Kreisringsegmente sind. Ein weiterer Fahrzeugluftreifen mit einer Seitenwandschraffur ist aus der US 2010/0258231 A1 bekannt. Die Seitenwandschraffur weist Schraffurflächen auf, welche jeweils von unter unterschiedlichen Winkeln zur radialen Richtung verlaufenden Erhebungen gebildet sind, die jedoch von Schraffurfläche zu Schraffurfläche keine Verbindungen aufweisen. Aus der US 2011/0139326 A1 ist eine Seitenwandschraffur mit einer in radialer Richtung verlaufenden Basisschraffur bekannt, bei welcher die Erhebungen in kurzen Abschnitten wellen- oder zick-zack-förmig verlaufen, sodass entlang der wellen- oder zick-zack-förmigen Abschnitte ein Dekorelement, ein Buchstabe oder dergleichen nachgebildet wird.
Schraffuren aus nebeneinander verlaufenden kleinen Erhebungen, die zur Strukturierung der Oberflächen von Reifenseitenwänden verwendet werden, haben in erster Linie die Aufgabe, den Kontrast zu den glatten Flächenbereichen der Seitenwände zu verstärken, um derart beispielsweise die Schriftzüge deutlicher hervorzuheben. Darüber hinaus lassen sich mit Schraffurflächen konstruktionsbedingte Unebenheiten in der Reifenseitenwänden kaschieren. Die daher durchwegs gegebene technische Notwendigkeit von Schraffuren auf Seitenwänden lässt sich auch gestalterisch nutzen, wobei zunehmend das Bedürfnis besteht, Schraffuren zur Individualisierung der Seitenwanddesigns und damit der Fahrzeugreifen heranzuziehen, wobei auch dreidimensionale Gestaltungen erwünscht sind. Letzteres ist jedoch nicht möglich, da dadurch die Gefahr einer ungleichen Verteilung des Gummimaterials entsteht, welche zur Störung der Uniformity des Reifens führen würde. An den Reifenseitenwänden werden daher die üblichen Erhebungen, die Schraffurflächen bilden, bei PKW-Reifen auf eine Höhe von 0,3 mm für Schraffuren und auf eine Höhe von 0,6 mm für Erhebungen an glattflächigen Bereichen beschränkt.

Der Erfindung liegt die Aufgabe zugrunde, Schraffuren bzw. Schraffurflächen in der Seitenwand eines Reifens derart ausführen zu können, dass eine Individualisierung des Seitenwanddekors und das Erzielen von dreidimensionalen Effekten möglich sind.
Gelöst wird die gestellte Aufgabe erfindungsgemäß dadurch, dass die Basisschraffur derart von ihrer Grundausrichtung abgelenkt ist, dass die gebildeten Schraffurflächen dreidimensionale Formen bzw. Körpern simulieren, welche die Basisschraffur unterbrechen.
Gemäß der Erfindung wird daher eine einfache Basisschraffur so von ihrer Grundausrichtung abgelenkt, dass Schraffurflächen gebildet werden, die dreidimensionalen Formen bzw. Körpern. Dieser dreidimensionale Effekt lässt sich durch folgendes Beispiel erklären: Projiziert man Lichtlinien auf eine dreidimensional verformte Fläche, so werden diese durch die jeweilige Form der Fläche in ihrem Verlauf beeinflusst und abgelenkt. Die entsprechenden Formen werden daher viel deutlicher erkennbar als durch ihre an sich vorhandene Dreidimensionalität. Diese Methode wird beispielsweise zur Erkennung von Dellen und Beulen auf Autoblechen verwendet. Gedanklich können nun diese Lichtlinien durch Schraffurlinien (Erhebungen) ersetzt werden, wobei bei der Erfindung die Ablenkung nur simuliert ist. Es gibt keine tatsächlich dreidimensional verformte Fläche, aber die Ablenkung der Schraffurlinien ist trotzdem vorhanden. Die Erfindung gestattet es daher prinzipiell, nahezu jede dreidimensionale Geometrie bzw. beliebige dreidimensionale Körper vorzutäuschen. Damit eröffnet die Erfindung eine Vielzahl von Möglichkeiten, individuelle, dreidimensional wirkende Designelemente an Seitenwänden von Fahrzeugreifen anzubringen.
Bei einer bevorzugten Ausführungsforrn der Erfindung verlaufen die Erhebungen in der Basisschraffur im Wesentlichen geradlinig oder überhaupt geradlinig und insbesondere auch parallel bzw. im Wesentlichen parallel zueinander. Auf diese Weise wird eine unauffällige Basisschraffur geschaffen, die gegenüber den Schraffurflächen, in welchen die abgelenkten Abschnitte der Erhebungen aus der Basisschraffur verlaufen, zurücktritt. Die Erhebungen in der Basisschraffur können ferner auch bogenförmig gekrümmt oder in Wellenform verlaufen.

Auch die von den Erhebungen der Basisschraffur abgelenkten Abschnitte, welche die Schraffurflächen bilden, können geradlinig oder im Wesentlichen geradlinig oder alternativ auch bogenförmig, wellenförmig und dergleichen verlaufen. Vorteilhaft ist es, wenn die abgelenkten Abschnitte parallel bzw. im Wesentlichen parallel zueinander verlaufen. Je nachdem, wie groß der Ablenkungswinkel ist, weisen die abgelenkten Abschnitte in den einzelnen Schraffurflächen unterschiedliche gegenseitige Abstände auf. So können in einer Schraffurfläche eines Dekorelementes die abgelenkten Abschnitte zueinander einen wesentlich größeren Abstand aufweisen, als die abgelenkten Abschnitte in einer anderen Schraffurfläche des gleichen Dekorelementes. Die gegenseitigen Abstände sind insbesondere jeweils gleich groß. Durch diese Maßnahmen können besondere dreidimensionale Effekte erzielt werden und es kann eine Vielfalt an individuellen, dreidimensional wirkenden Designelementen kreiert werden.

Die Design- bzw. Dekorelemente können sich aus Schraffurflächen zusammensetzen, die Mantelflächen geometrischer Körper, beispielsweise Pyramidenflächen, simulieren. Solche Dekorelemente vermitteln den Eindruck von dreidimensionalen, auf der Seitenwand positionierten Körpern.

Gut erkennbar sind erwähnten Effekte, wenn die Ablenkungswinkel mindestens 5 ° betragen. Der Ablenkungswinkel kann auch wesentlich größer sein, beispielsweise kann er 90° übersteigen. Um die einzelnen Schraffurflächen eines Dekorelementes gut wahrnehmen zu können, ist es ferner vorteilhaft, wenn mindestens fünf, vorzugsweise mindestens zehn Erhebungen pro Schraffurfläche vorgesehen sind.

Weitere Merkmale, Vorteile und Einzelheiten der Erfindung werden nun anhand der Zeichnung, die mehrere Ausführungsbeispiele darstellt, näher beschrieben. Dabei zeigen
Fig. 1 einen Ausschnitt einer Seitenwand eines Fahrzeugluftreifens in Draufsicht mit einer Ausführungsform der Erfindung,
Fig. 2 einen Ausschnitt eines Schraffurbereiches in einer Seitenwand eines Fahrzeugluftreifens mit einer weiteren Ausführungsform der Erfindung und
Fig. 3 und Fig. 4 weitere Ausführungsbeispiele der Erfindung anhand von Ausschnitten von Schraffurbereichen in einer Seitenwand eines Fahrzeugluftreifens.

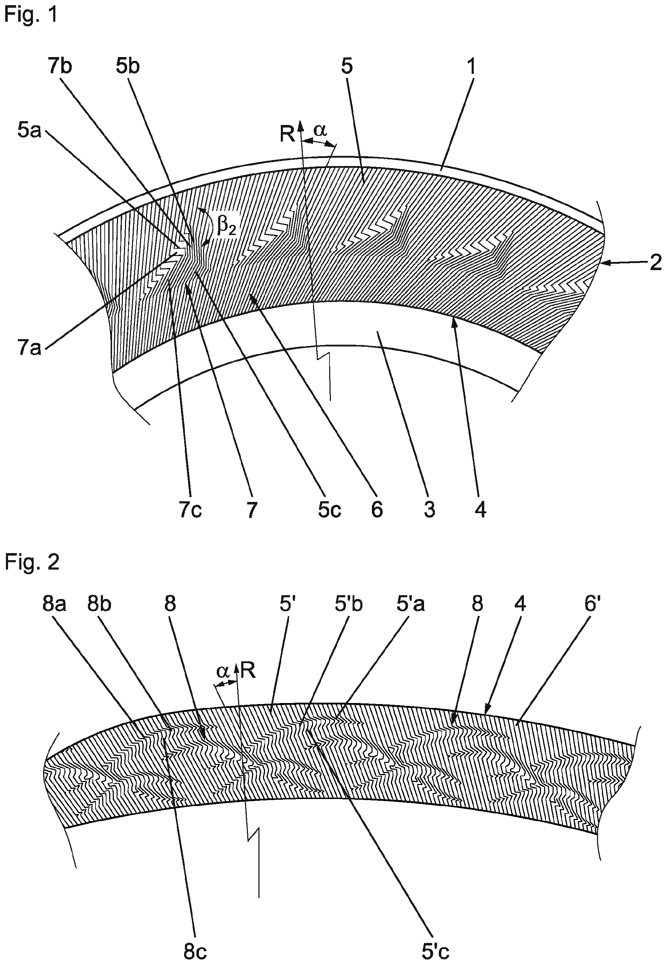

Fig. 1 bis Fig. 4 zeigen in die Ebene projizierte Darstellungen einer Seitenwand bzw. von Schraffurbereichen, wodurch die leichte Wölbung der Reifenseitenwand unberücksichtigt bleibt. Lediglich in Fig. 1 ist schematisch ein Umfangsabschnitt der Seitenansicht eines Fahrzeugluftreifens mit einem Laufstreifenauslauf 1, einer Seitenwand 2 und einem äußeren Wulstbereich 3, welcher bei auf einer Felge montiertem Reifen durch die Felge zumindest teilweise abgedeckt ist, gezeigt.

Auf der Seitenwand eines Fahrzeugluftreifens sind üblicherweise die vorgeschriebenen Angaben, wie die Dimensionsangaben, der Speed Index, der Hersteller, der Verwendungszweck (Sommer-/Winterreifen) und dergleichen angegeben. Diese Angaben sind auf glatten Flächenbereichen vorgesehen und sind aus erhabenen Elementen im Gummimaterial der Seitenwand gebildet. Es verbleibt jedoch genug Freifläche auf den Seitenwänden von Fahrzeugluftreifen, um Dekors, die einerseits den Kontrast zu den glatten Flächenbereichen in der Seitenwand, wo die erwähnten Schriftzüge untergebracht sind, deutlich machen und andererseits etwaige konstruktionsbedingte Unebenheiten an den Reifenseitenwänden kaschieren.

Als Schraffur werden Dekors in der Seitenwand von Fahrzeugluftreifen bezeichnet, die sich jeweils aus einer Vielzahl von im Querschnitt insbesondere dreieckförmigen Erhebungen zusammensetzen, die nebeneinander und insbesondere parallel bzw. im Wesentlichen parallel zueinander verlaufen. Die Höhe dieser Erhebungen beträgt 0,2 mm bis 1 mm, bei PKW-Reifen üblicherweise in der Größenordnung von 0,3 mm und bei LKW-Reifen üblicherweise von 0,5 mm bis 0,8 mm. Zumindest innerhalb eines bestimmten Schraffurbereiches bzw. einer Schraffurfläche weisen sämtliche Erhebungen übereinstimmende Höhen auf. Es kann vorgesehen sein, einzelne Schraffurflächen oder Schraffurbereiche aus Erhebungen zusammenzusetzen, die eine andere Höhe aufweisen als Erhebungen von weiteren vorgesehenen Schraffurflächen. Wie noch beschrieben wird kann der gegenseitige Abstand der Erhebungen in unterschiedlichen Schraffurflächen oder Schraffurbereichen verschieden sein. Die Breite der Erhebungen an ihrer Basis entspricht insbesondere im Wesentlichen ihrer Höhe, kann jedoch auch etwas größer oder kleiner sein.

Bei der in Fig. 1 gezeigten Ausführungsform ist ein Seitenwanddekor 4 gezeigt, welcher eine Basisschraffur 6 aufweist, welche aus einer Vielzahl von geradlinig verlaufenden Erhebungen 5 besteht, die zur radialen Richtung R unter einem spitzen Winkel α verlaufen, welcher bei dieser Ausführungsform insbesondere ≤ 45° ist und vorzugsweise 20° bis 30° beträgt. Infolge der Kreisringform der Seitenwand 2 ist der gegenseitige Abstand der Erhebungen 5 am radial inneren Rand der Basisschraffur 6 kleiner als am radial äußeren Rand der Basisschraffur 6. Die Erhebungen 5 verlaufen daher auch nicht exakt parallel zueinander. Die Basisschraffur 6 ist durch in einer Reihe angeordnete, einen dreieckigen Grundriss aufweisende Dekorelemente 7 unterbrochen, welche jeweils aus drei dreieckigen Schraffurflächen 7a, 7b und 7c zusammengesetzt sind, die durch eine Ablenkung einer Anzahl von Erhebungen 5 der Basisschraffur 6 gebildet sind. Jede der unterschiedlich großen Schraffurflächen 7a, 7b und 7c hat die Form eines ungleichseitigen Dreieckes. Die Ablenkung der Erhebungen 5 aus der Basisschraffur 6 erfolgt gezielt derart, dass die Schraffurflächen 7a, 7b und 7c gebildet werden. So verlaufen beispielsweise in der Schraffurfläche 7a Abschnitte 5a der Erhebungen 5, welche um einen Winkel vom Verlauf der Erhebungen 5 in der Basisschraffur 6 abgelenkt sind, welcher im Wesentlichen 90° beträgt. Dadurch weisen die Abschnitte 5a der Erhebungen 5 in der Schraffurfläche 7a einen wesentlich größeren gegenseitigen Abstand auf als die Erhebungen 5 in der Basisschraffur 6. Die Abschnitte 5b der Erhebungen 5 in der Schraffurfläche 7b entstehen zum Teil durch Ablenkung von Erhebungen 5 der Basisschraffur 6 und zum Teil durch Ablenkung der Abschnitte 5a aus der Schraffurfläche 7a. Die Abschnitte 5c in der Schraffurfläche 7c entstehen durch Ablenkung der Abschnitte 5a und 5b aus den Schraffurflächen 7a und 7b. Die Abschnitte 5b und 5c in den Schraffurflächen 7b und 7c weisen einen geringeren gegenseitigen Abstand auf als die Erhebungen 5 in der Basisschraffur 6. Die Gesamtanzahl der Erhebungen 5 bleibt, da diese lediglich abgelenkt werden, konstant. Durch die spezielle Ablenkung von Abschnitten aus der geradlinigen Basisschraffur 6 entsteht der Eindruck von dreidimensionalen Körpern, hier dreiseitigen Pyramiden, die sich auf der Basis schraffurfläche befinden und diese quasi "verformen". Die Erfindung gestattet es daher, dreidimensionale Strukturen vorzutäuschen.

Bei der in Fig. 2 gezeigten Ausführungsform weist das Seitenwanddekor 4 ebenfalls eine Basisschraffur 6' aus einer Vielzahl von im Wesentlichen parallel zueinander und unter einem Winkel α von etwa 30° zur radialen Richtung R verlaufenden Erhebungen 5' auf. Durch Ablenkung der Erhebungen 5' der Basisschraffur 6' werden in der Basisschraffur 6' mondsichelförmige Dekorelemente 8 gebildet. Jeweils drei mondsichelförmige Dekorelemente 8 sind in einer Gruppe angeordnet, derart, dass der Eindruck entsteht, dass die Dekorelemente 8 teilweise "übereinander" verlaufen. Jedes mondsichelförmige Dekorelement 8 besteht aus drei Schraffurflächen 8a, 8b und 8c, die jede für sich ebenfalls im Wesentlichen mondsichelförmig gestaltet ist, wobei die Schraffurflächen 8a und 8c die Schraffurfläche 8b gemeinsam umschließen. In der Schraffurfläche 8b befinden sich Abschnitte 5'b der Erhebungen 5', die parallel zu den Erhebungen 5', jedoch mit einem seitlichen Versatz zu diesen, verlaufen. Die Abschnitte 5'a und 5'c der Erhebungen 5' in den Schraffurflächen 8a und 8c sind jeweils unter unterschiedlichen Winkeln von der Erhebungen 5' in der Basisschraffur 6' abgelenkt, verlaufen innerhalb der Schraffurflächen 8a und 8c im Wesentlichen parallel zueinander und derart, dass, je nach der Größe der Ablenkungswinkel, die Abschnitte 5'a bzw. 5'c in den Schraffurflächen 8a und 8c unter einem kleineren oder einem größeren gegenseitigen Abstand verlaufen als die Erhebungen 5' in der Basisschraffur 6. Diese Ausführungsform zeigt, dass die simuliertdreidimensionalen, mondsichelförmigen Dekorelemente 8 einander kreuzen können, sodass hier ein besonderer dreidimensionaler Effekt vermittelt wird.

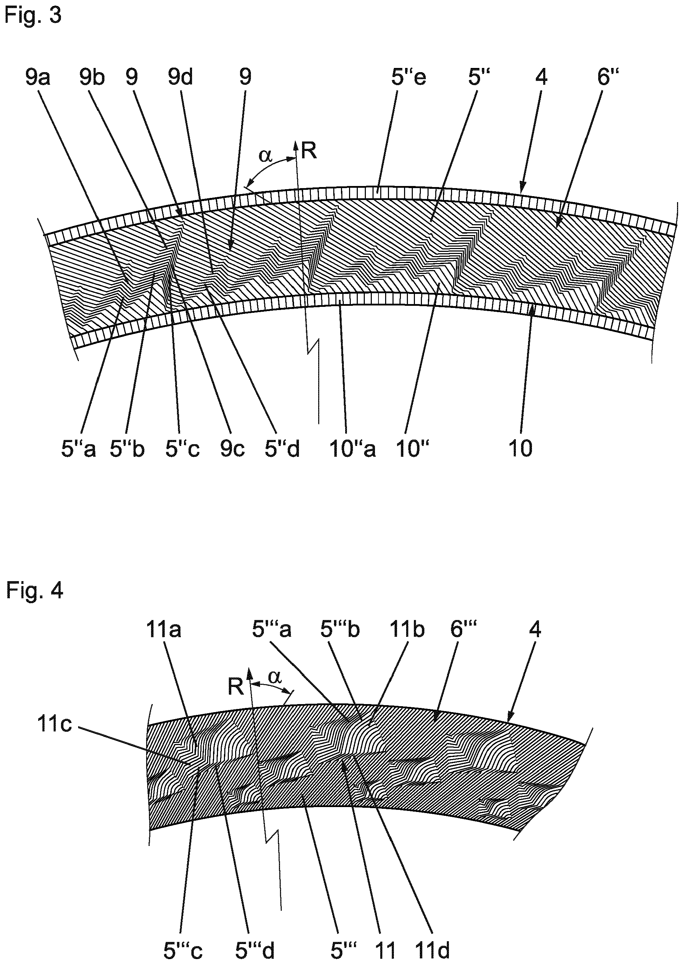

Fig. 3 zeigt eine Ausführungsform, bei der eine Basisschraffur 6" vorgesehen ist, die am radial äußeren Randbereich des Seitenwanddekors 4 beginnt und sich aus Erhebungen 5" zusammensetzt, die parallel zueinander verlaufen und unter einem Winkel α zur radialen Richtung R orientiert sind, welcher bei der gezeigten Ausführungsform > 45° ist und in der Größenordnung von 70° beträgt. Schraffurflächen 9a, 9b, die im Wesentlichen trapezförmig sind, und Schraffurflächen 9c, 9d, die im Wesentlichen dreieckig sind, simulieren Berg-/Tal-Strukturen bzw. Bergflanken, die spitz zu "Bergen" 9 zusammenlaufen. Sämtliche Schraffurflächen 9a, 9b, 9c und 9d entstehen durch vom geradlinigen Verlauf der Erhebungen 5" abgelenkte Abschnitte 5"a, 5"b, 5"c, 5"d der Erhebungen 5" bzw. dadurch, dass abgelenkte Abschnitte 5"a, 5"b, 5"c, 5"d aneinander anschließen. Die Abschnitte 5"a, 5"b, 5"c, 5"d werden Großteils ebenfalls abgelenkt und gehen in Erhebungen 10" einer Randschraffur 10 über, die im Wesentlichen dreieckförmige Flanken der simulierten Berge 9 bildet. Die Erhebungen 10" verlaufen unter einem wesentlich kleineren Winkel zur radialen Richtung R als die Erhebungen 5" in der Basisschraffur 6". Sowohl die Erhebungen 5" der Basisschraffur 6" als auch die Erhebungen 10" der Randschraffur 10 weisen schmale Randabschnitte 5"e, 10"a auf, welche durch im Wesentlichen in radialer Richtung R verlaufende abgelenkte Abschnitte der Erhebungen 5" und 10" gebildet sind. Diese unterstreichen die dreidimensionale Wirkung, die durch die Schraffurflächen 9a, 9b, 9c und 9d und die Randschraffur 10 entsteht.

Bei der in Fig. 4 gezeigten Ausführungsform weist das Seitenwanddekor 4 eine Basisschraffur 6'" auf, welche sich aus einer Vielzahl von Erhebungen 5'" zusammensetzt, die im Wesentlichen parallel zueinander verlaufen und unter einem Winkel α in der Größenordnung von 45° zur radialen Richtung R orientiert sind. Durch Ablenkung der Erhebungen 5'" aus der Basisschraffur 6'" werden Dekorelemente 11 gebildet, die in Draufsicht Parallelogramm ähnlich sind, jedoch unterschiedliche Größen aufweisen und sich jeweils aus vier Schraffurflächen 11a bis 11d zusammensetzen, in welchen Abschnitte 5"a bis 5"'d der Erhebungen 5"' verlaufen. Die Abschnitte 5'"a und 5'"b der Erhebungen 5'" in den Schraffurflächen 11a und 11b verlaufen gekrümmt, insbesondere etwa bogenförmig gekrümmt, und gehen durch entsprechende Ablenkung in die Abschnitte 5"'c und 5"'d der Erhebungen 5'" in den Schraffurflächen 11c und 11d über. Hier entsteht eine besondere dreidimensionale Wirkung durch bogenförmig bzw. in Draufsicht gekrümmt verlaufende Abschnitte 5'"a und 5'"b der Erhebungen 5'".

Die Erfindung gestattet es, eine Vielzahl von dreidimensionalen Strukturen bzw. Körpern durch Ablenkung von Erhebungen einer Schraffur unter Bildung definierter Schraffurflächen vorzutäuschen. Die Größenverhältnisse und Abstände zwischen den Erhebungen sowie deren tatsächliche Höhe werden auf die zu simulierenden dreidimensionalen Gestaltungen abgestimmt. Um eine einzelne Schraffurfläche eines simulierten dreidimensionalen Körpers gut wahrnehmen zu können, ist es vorteilhaft, wenn mindestens fünf, vorzugsweise mindestens zehn Erhebungen auf dieser Fläche vorhanden sind. Darüber hinaus ist es von Vorteil, Winkeländerungen - Ablenkungen - der Erhebungen unter mindestens 5° auszuführen, damit die Lichtreflexionen der Erhebungen zum gegenseitigen Kontrast der einzelnen Schraffurflächen eines simulierten Körpers beitragen können.

### Bezugsziffernliste

- 1: Laufstreifenauslauf
- 2: Seitenwand
- 3: Wulstbereich
- 4: Seitenwanddekor
- 5, 5', 5", 5"': Erhebung
- 5a, 5b, 5c: Abschnitt
- 5'a, 5'b, 5'c: Abschnitt
- 5"a bis 5"d: Abschnitt
- 5"'a bis 5"'d: Abschnitt
- 5"e: Randabschnitt
- 6, 6', 6", 6'": Basisschraffur
- 7: Dekorelement
- 7a, 7b, 7c: Schraffurfläche
- 8: Dekorelement
- 8a, 8b, 8c: Schraffurfläche
- 9: Berg
- 9a, 9b, 9c, 9d: Schraffurfläche
- 10: Randschraffur
- 10": Erhebung
- 10"a: Randabschnitt
- 11: Dekorelement
- 11a bis 11d: Schraffurfläche

## Patentansprüche

1. Fahrzeugreifen mit einer dekorativen Seitenwandschraffur aus einer Vielzahl von nebeneinander verlaufenden Erhebungen (5, 5', 5", 5"'), die eine Basisschraffur (6, 6', 6", 6'") bilden, wobei von Erhebungen (5, 5', 5", 5"') aus der Basisschraffur (6, 6', 6", 6"') unter übereinstimmend großen Winkeln abgelenkte Abschnitte (5a, 5'a, 5"a, 5"'a) zumindest eine örtlich begrenzte Schraffurfläche (7a, 8a, 9a, 9c, 11a, 11b) bilden, wobei die abgelenkten Abschnitte (5a, 5'a, 5"a, 5"'a) durch nochmaliges, unter übereinstimmend großen Winkeln erfolgtes Ablenken in zumindest eine weitere Schraffurfläche (7b, 7c, 8b, 8c, 9b, 9d, 11c, 11d) übergehen, wobei die Erhebungen in sämtlichen Schraffurflächen (7a, 7b, 7c, 8a, 8b, 8c, 9a, 9b, 9c, 9d, 11a, 11b, 11c, 11d) Abschnitte (5a, 5b, 5c, 5'a, 5'b, 5'c, 5"a bis 5"d, 5"'a bis 5"'d) im Verlauf von Erhebungen (5, 5', 5", 5"') aus der Basisschraffur (6, 6', 6", 6"') sind,
**dadurch gekennzeichnet,**
**dass** die Basisschraffur (6, 6', 6", 6'") derart von ihrer Grundausrichtung abgelenkt ist, dass die gebildeten Schraffurflächen (7a, 7b, 7c, 8a, 8b, 8c, 9a, 9b, 9c, 9d, 11a, 11b, 11c, 11d) dreidimensionale Formen bzw. Körpern simulieren, welche die Basisschraffur (6, 6', 6", 6'") unterbrechen.

2. Fahrzeugreifen nach Anspruch 1, **dadurch gekennzeichnet, dass** die Schraffurflächen (7a, 7b, 7c, 8a, 8b, 8c, 9a, 9b, 9c, 9d, 11a, 11b, 11c, 11d) Dekorelemente (7, 8, 11) bilden, die sich innerhalb der Basisschraffur (6, 6', 6", 6"') befinden.

3. Fahrzeugreifen nach Anspruch 1 oder 2, **dadurch gekennzeichnet, dass** die Erhebungen (5, 5', 5", 5"') in der Basisschraffur (6, 6', 6", 6'") geradlinig oder im Wesentlichen geradlinig verlaufen.

4. Fahrzeugreifen nach einem der Ansprüche 1 bis 3, **dadurch gekennzeichnet, dass** die abgelenkten Abschnitte (5a, 5b, 5c, 5'a, 5'b, 5'c, 5"a bis 5"d, 5"'c, 5"'d) geradlinig oder im Wesentlichen geradlinig verlaufen

5. Fahrzeugreifen nach einem der Ansprüche 1 bis 3, **dadurch gekennzeichnet, dass** die abgelenkten Abschnitte (5"'a, 5"'b) bogenförmig verlaufen.

6. Fahrzeugreifen nach einem der Ansprüche 1 bis 5, **dadurch gekennzeichnet, dass** die Erhebungen (5, 5', 5", 5"') in der Basisschraffur (6, 6', 6", 6"') parallel bzw. im Wesentlichen parallel zueinander verlaufen.

7. Fahrzeugreifen einem der Ansprüche 1 bis 6 **dadurch gekennzeichnet, dass** die abgelenkten Abschnitte (5a, 5b, 5c, 5'a, 5'b, 5'c, 5"a bis 5"d, 5"'a bis 5"'d) parallel bzw. im Wesentlichen parallel zueinander verlaufen.

8. Fahrzeugreifen nach einem der Ansprüche 1 bis 7, **dadurch gekennzeichnet, dass** die Schraffurflächen (7a, 7b, 7c) Mantelflächen geometrischer Körper, beispielsweise Pyramidenflächen, simulieren.

9. Fahrzeugreifen nach einem der Ansprüche 1 bis 8, **dadurch gekennzeichnet, dass** die Ablenkungswinkel mindestens 5° betragen.

10. Fahrzeugreifen nach einem der Ansprüche 1 bis 9, **dadurch gekennzeichnet, dass** die Anzahl der die Schraffurflächen (7a, 7b, 7c, 8a, 8b, 8c, 9a, 9b, 9c, 9d, 11a, 11b, 11c, 11d) bildenden bzw. durchquerenden Abschnitte (5a, 5b, 5c, 5'a, 5'b, 5'c, 5"a bis 5"d, 5"'a bis 5"'d) der Erhebungen (5, 5', 5", 5"') mindestens fünf, insbesondere mindestens zehn beträgt.

## Claims

1. Pneumatic tyre with a decorative sidewall pattern comprising a multiplicity of ridges (5, 5', 5", 5"') running next to one another, which form a background pattern (6, 6', 6", 6"'), wherein portions (5a, 5'a, 5"a, 5"'a) of ridges (5, 5', 5", 5"') diverted at angles of equal magnitude out of the background pattern (6, 6', 6", 6"') form at least a locally delimited surface pattern (7a, 8a, 9a, 9c, 11a, 11b), wherein, as a result of further diversion, occurring at angles of equal magnitude, the diverted portions (5a, 5'a, 5''a, 5"'a) go over into at least one further surface pattern (7b, 7c, 8b, 8c, 9b, 9d, 11c, 11d), wherein the ridges in all of the surface patterns (7a, 7b, 7c, 8a, 8b, 8c, 9a, 9b, 9c, 9d, 11a, 11b, 11c, 11d) are portions (5a, 5b, 5c, 5'a, 5'b, 5'c, 5"a to 5"d, 5"'a to 5"'d) that are in the course of ridges (5, 5', 5", 5"') from the background pattern (6, 6', 6", 6"'),
**characterized**
**in that** the background pattern (6, 6', 6", 6"') is diverted from its basic alignment in such a way that the surface patterns (7a, 7b, 7c, 8a, 8b, 8c, 9a, 9b, 9c, 9d, 11a, 11b, 11c, 11d) formed simulate three-dimensional shapes or bodies that interrupt the background pattern (6, 6', 6", 6"').

2. Pneumatic tyre according to Claim 1, **characterized in that** the surface patterns (7a, 7b, 7c, 8a, 8b, 8c, 9a, 9b, 9c, 9d, 11a, 11b, 11c, 11d) form decorative elements (7, 8, 11), which are located within the background pattern (6, 6', 6", 6"').

3. Pneumatic tyre according to Claim 1 or 2, **characterized in that** the ridges (5, 5', 5", 5"') in the background pattern (6, 6', 6", 6"') run in a straight line or substantially in a straight line.

4. Vehicle tyre according to one of Claims 1 to 3, **characterized in that** the diverted portions (5a, 5b, 5c, 5'a, 5'b, 5'c, 5"a to 5"d, 5"'c, 5"'d) run in a straight line or substantially in a straight line.

5. Vehicle tyre according to one of Claims 1 to 3, **characterized in that** the diverted portions (5"'a, 5"'b) run in an arcuate form.

6. Vehicle tyre according to one of Claims 1 to 5, **characterized in that** the ridges (5, 5', 5", 5"') in the background pattern (6, 6', 6", 6"') run parallel or substantially parallel to one another.

7. Vehicle tyre according to one of Claims 1 to 6, **characterized in that** the diverted portions (5a, 5b, 5c, 5'a, 5'b, 5'c, 5"a to 5"d, 5"'a to 5"'d) run parallel or substantially parallel to one another.

8. Vehicle tyre according to one of Claims 1 to 7, **characterized in that** the surface patterns (7a, 7b, 7c) simulate lateral surfaces of geometrical bodies, for example surfaces of a pyramid.

9. Vehicle tyre according to one of Claims 1 to 8, **characterized in that** the diverting angles are at least 5°.

10. Vehicle tyre according to one of Claims 1 to 9, **characterized in that** the number of portions (5a, 5b, 5c, 5'a, 5'b, 5'c, 5''a to 5"d, 5"'a to 5"'d) of the ridges (5, 5', 5", 5"') forming or passing through the surface patterns (7a, 7b, 7c, 8a, 8b, 8c, 9a, 9b, 9c, 9d, 11a, 11b, 11c, 11d) is at least five, in particular at least ten.

## Revendications

1. Pneumatique de véhicule avec un hachurage de flanc décoratif composé d'une multiplicité de protubérances s'étendant l'une à côté de l'autre (5, 5', 5", 5"') qui forment un hachurage de base (6, 6', 6", 6'"), dans lequel des parties (5a, 5'a, 5"a, 5"'a) déviées par des protubérances (5, 5', 5", 5"') hors du hachurage de base (6, 6', 6", 6"') sous des angles de grandeur correspondante forment au moins une surface hachurée localement limitée (7a, 8a, 9a, 9c, 11a, 11b), dans lequel les parties déviées (5a, 5'a, 5"a, 5"'a) se prolongent en au moins une autre surface hachurée (7b, 7c, 8b, 8c, 9b, 9d, 11c, 11d) par une nouvelle déviation opérée sous des angles de grandeur correspondante, dans lequel les protubérances dans toutes les surfaces hachurées (7a, 7b, 7c, 8a, 8b, 8c, 9a, 9b, 9c, 9d, 11a, 11b, 11c, 11d) sont des parties (5a, 5b, 5c, 5'a, 5'b, 5'c, 5"a à 5"d, 5"'a à 5"'d) dans le tracé de protubérances (5, 5', 5", 5"') du hachurage de base (6, 6', 6", 6'"), **caractérisé en ce que** le hachurage de base (6, 6', 6", 6"') est dévié de son orientation de base, de telle manière que les surfaces hachurées formées (7a, 7b, 7c, 8a, 8b, 8c, 9a, 9b, 9c, 9d, 11a, 11b, 11c, 11d) simulent des formes ou des corps tridimensionnels, qui interrompent le hachurage de base (6, 6', 6", 6"').

2. Pneumatique de véhicule selon la revendication 1, **caractérisé en ce que** les surfaces hachurées (7a, 7b, 7c, 8a, 8b, 8c, 9a, 9b, 9c, 9d, 11a, 11b, 11c, 11d) forment des éléments décoratifs (7, 8, 11), qui se trouvent à l'intérieur du hachurage de base (6, 6', 6", 6"').

3. Pneumatique de véhicule selon la revendication 1 ou 2, **caractérisé en ce que** les protubérances (5, 5', 5", 5"') s'étendent dans le hachurage de base (6, 6', 6", 6"') en ligne droite ou essentiellement en ligne droite.

4. Pneumatique de véhicule selon l'une quelconque des revendications 1 à 3, **caractérisé en ce que** les parties déviées (5a, 5b, 5c, 5'a, 5'b, 5'c, 5"a à 5"d, 5"'c, 5"'d) s'étendent en ligne droite ou essentiellement en ligne droite.

5. Pneumatique de véhicule selon l'une quelconque des revendications 1 à 3, **caractérisé en ce que** les parties déviées (5"'a, 5"'b) s'étendent en forme d'arc.

6. Pneumatique de véhicule selon l'une quelconque des revendications 1 à 5, **caractérisé en ce que** les protubérances (5, 5', 5", 5"') dans le hachurage de base (6, 6', 6", 6"') s'étendent parallèlement ou essentiellement parallèlement l'une à l'autre.

7. Pneumatique de véhicule selon l'une quelconque des revendications 1 à 6, **caractérisé en ce que** les parties déviées (5a, 5b, 5c, 5'a, 5'b, 5'c, 5"a à 5"d, 5"'a à 5"'d) s'étendent parallèlement ou essentiellement parallèlement l'une à l'autre.

8. Pneumatique de véhicule selon l'une quelconque des revendications 1 à 7, **caractérisé en ce que** les surfaces hachurées (7a, 7b, 7c) simulent des faces latérales de corps géométriques, notamment des faces de pyramides.

9. Pneumatique de véhicule selon l'une quelconque des revendications 1 à 8, **caractérisé en ce que** les angles de déviation valent au moins 5°.

10. Pneumatique de véhicule selon l'une quelconque des revendications 1 à 9, **caractérisé en ce que** le nombre des parties (5a, 5b, 5c, 5'a, 5'b, 5'c, 5"a à 5"d, 5"'a à 5"'d) des protubérances (5, 5', 5", 5"') formant ou traversant les surfaces hachurées (7a, 7b, 7c, 8a, 8b, 8c, 9a, 9b, 9c, 9d, 11a, 11b, 11c, 11d) vaut au moins cinq, en particulier au moins dix.
